Europäisches Patentamt

European Patent Office

Office européen des brevets

(19)

(11) **EP 0 932 153 A2**

(12) **EUROPEAN PATENT APPLICATION**

(43) Date of publication:
   **28.07.1999 Bulletin 1999/30**

(51) Int Cl.$^6$: **G11B 20/10**, G11B 15/087,
   **G11B 7/00**

(21) Application number: **99300298.9**

(22) Date of filing: **18.01.1999**

(84) Designated Contracting States:
   **AT BE CH CY DE DK ES FI FR GB GR IE IT LI LU
   MC NL PT SE**
   Designated Extension States:
   **AL LT LV MK RO SI**

(30) Priority: **21.01.1998 JP 983398**

(71) Applicant: **PIONEER ELECTRONIC
   CORPORATION
   Meguro-ku Tokyo-to (JP)**

(72) Inventors:
   • **Shimizu, Yuji, Pioneer Electronic Corp.
     Tokorozawa-shi, Saitama-ken (JP)**

   • **Noguchi, Tadashi, Pioneer Electronic Corp.
     Tokorozawa-shi, Saitama-ken (JP)**
   • **Horiuchi, Takahiro, Pioneer Electronic Corp.
     Tokorozawa-shi, Saitama-ken (JP)**
   • **Nagahara, Shinichi, Pioneer Electronic Corp.
     Tokorozawa-shi, Saitama-ken (JP)**
   • **Kanegae, Toru, Pioneer Electronic Corp.
     Tokorozawa-shi, Saitama-ken (JP)**
   • **Horikawa, Kunihiko, Pioneer Electronic Corp.
     Tokorozawa-shi, Saitama-ken (JP)**

(74) Representative: **Haley, Stephen
   Gill Jennings & Every,
   Broadgate House,
   7 Eldon Street
   London EC2M 7LH (GB)**

(54) **Information recording and reproducing apparatus**

(57)   An information recording and reproducing apparatus (S) is provided with: an information recording device (R) for generating record information by processing input information, which is inputted from the external at a predetermined input rate, and for recording the generated record information onto a record medium (1) at a recording rate which is higher than the predetermined input rate; an information reproducing device (P) for detecting the record information from the record medium at a predetermined detecting rate and for reproducing the detected record information by re-processing the detected record information to output the reproduced record information to the external at an output rate which is lower than the predetermined detecting rate; and a controlling device (14) for controlling the information recording device to temporarily stop generating and/or recording the record information during a first pause time period, which is prescribed by a difference between the recording rate and the input rate, and for controlling the information reproducing device to detect and reproduce the record information, which has been recorded on the record medium by the information recording device, during the first pause time period.

FIG. 1

## Description

The present invention generally relates to an information recording and reproducing apparatus for recording information onto a record medium and reproducing the information from the record medium, and more particularly to a control for the recording and reproducing operations in such an apparatus.

There is a VTR (Video Tape Recorder) as an information recording and reproducing apparatus capable of recording and reproducing the information such as video information.

Here, in the VTR, there is a single head for performing the recording and reproducing operations, and the VTR has such a structure that the recording and reproducing operations are performed with respect to one video tape by use of the single head.

However, according to the above-mentioned structure of the VTR, since the recording and reproducing operations are performed by use of the single head, it is not possible to perform the recording and reproducing operations simultaneously.

Therefore, for example, when the reproduction of the information which has been recorded is desired to be started while recording the information, it is necessary to stop recording the information in the middle at the time point and then reproducing the information, or to complete recording all of the information and after that reproduce it.

In this case, if the recording is stopped in the middle, there is a problem that it is not possible to record the information after that. Alternatively, if waiting for the completion of the recording, there is another problem that it is not possible to reproduce the information when it is desired.

It is therefore an object of the present invention to provide an information recording and reproducing apparatus for performing recording and reproducing operations with respect to one record medium, which can perform simultaneously the recording and reproducing operations so as to improve the convenience.

The above object of the present invention can be achieved by a first information recording and reproducing apparatus provided with: an information recording device for generating record information by processing input information, which is inputted from the external at a predetermined input rate, and for recording the generated record information onto a record medium at a recording rate which is higher than the predetermined input rate; an information reproducing device for detecting the record information from the record medium at a predetermined detecting rate and for reproducing the detected record information by re-processing the detected record information to output the reproduced record information to the external at an output rate which is lower than the predetermined detecting rate; and a controlling device for controlling the information recording device to temporarily stop generating and/or recording the record information during a first pause time period, which is prescribed by a difference between the recording rate and the input rate, and for controlling the information reproducing device to detect and reproduce the record information, which has been recorded on the record medium by the information recording device, during the first pause time period.

According to the first information recording and reproducing apparatus, on one hand, when the input information is inputted from the external at the predetermined input rate, the record information is generated by processing the input information by the information recording device, and the generated record information is recorded onto the record medium at the recording rate, which is higher than the predetermined input rate. On the other hand, the record information is detected from the record medium at the predetermined detecting rate by the information reproducing device, and the detected record information is reproduced by re-processing the detected record information, so that the reproduced record information is outputted to the external at the output rate, which is lower than the predetermined detecting rate. At this time, under the control of the controlling device, the information recording device temporarily stops generating and/or recording the record information during the first pause time period, which is prescribed by the difference between the recording rate and the input rate. Along with this, under the control of the controlling device, the information reproducing device detects and reproduces the record information, which has been recorded on the record medium by the information recording device, during the first pause time period.

Accordingly, the operation of recording the record information and the operation of reproducing the record information which has been recorded can be apparently performed simultaneously. Thus, the convenience of the information recording and reproducing apparatus can be certainly improved.

The above object of the present invention can be also achieved by a second information recording and reproducing apparatus provided with: an information recording device for generating record information by processing input information, which is inputted from the external at a predetermined input rate, and for recording the generated record information onto a record medium at a recording rate which is higher than the predetermined input rate; an information reproducing device for detecting the record information from the record medium at a predetermined detecting rate and for reproducing the detected record information by re-processing the detected record information to output the reproduced record information to the external at an output rate which is lower than the predetermined detecting rate; and a controlling device for controlling the information reproducing device to temporarily stop detecting and/or reproducing the record information during a second pause time period, which is prescribed by a difference between the detecting rate and the output rate, and for controlling the information recording device to generate and record the record information, which has never been recorded on the record medium yet, during the second pause time period.

According to the second information recording and reproducing apparatus, on one hand, when the input information is inputted from the external at the predetermined input rate, the record information is generated by processing the input information by the information recording device, and the generated record information is recorded onto the record medium at the recording rate, which is higher than the predetermined input rate. On the other hand, the record information is detected from the record medium at the predetermined detecting rate by the information reproducing device, and the detected record information is reproduced by re-processing the detected record information, so that the reproduced record information is outputted to the external at the output rate, which is lower than the predetermined detecting rate. At this time, under the control of the controlling device, the information reproducing device temporarily stops detecting and/or reproducing the record information during the second pause time period, which is prescribed by the difference between the detecting rate and the output rate.

Along with this, under the control of the controlling device, the information recording device generates and records the record information, which has never been recorded on the record medium yet, during the second pause time period.

Accordingly, the operation of recording the record information and the operation of reproducing the record information which has been recorded can be apparently performed simultaneously. Thus, the convenience of the information recording and reproducing apparatus can be certainly improved.

The above object of the present invention can be also achieved by a third information recording and reproducing apparatus provided with: an information recording device for generating record information by processing information, which is inputted from the external at a predetermined input rate, and for recording the generated record information onto a record medium at a recording rate which is higher than the predetermined input rate; an information reproducing device for detecting the record information from the record medium at a predetermined detecting rate and for reproducing the detected record information by re-processing the detected record information to output the reproduced record information to the external at an output rate which is lower than the predetermined detecting rate; and a controlling device for controlling the information recording device to temporarily stop generating and/or recording the record information during a first pause time period, which is prescribed by a difference between the recording rate and the input rate, for controlling the information reproducing device to detect and reproduce the record information, which has been recorded on the record medium by the information recording device, during the first pause time period while continuously inputting the input information from the external, for controlling the information reproducing device to temporarily stop detecting and/or reproducing the record information during a second pause time period, which is prescribed by a difference between the detecting rate and the output rate, and for controlling the information recording device to generate and record the record information, which has never been recorded on the record medium yet, during the second pause time period while continuously outputting the reproduced record information to the external.

According to the third information recording and reproducing apparatus, on one hand, when the input information is inputted from the external at the predetermined input rate, the record information is generated by processing the input information by the information recording device, and the generated record information is recorded onto the record medium at the recording rate, which is higher than the predetermined input rate. On the other hand, the record information is detected from the record medium at the predetermined detecting rate by the information reproducing device, and the detected record information is reproduced by re-processing the detected record information, so that the reproduced record information is outputted to the external at the output rate, which is lower than the predetermined detecting rate. At this time, while the input information is continuously inputted from the external, under the control of the controlling device, the information recording device temporarily stops generating and/or recording the record information during the first pause time period. Along with this, under the control of the controlling device, the information reproducing device detects and reproduces the record information, which has been recorded on the record medium by the information recording device, during the first pause time period. Further, while the reproduced record information is continuously outputted to the external, under the control of the controlling device, the information reproducing device temporarily stops detecting and/or reproducing the record information during the second pause time period. Along with this, under the control of the controlling device, the information recording device generates and records the record information, which has never been recorded on the record medium yet, during the second pause time period.

Accordingly, the operation of recording the record information and the operation of reproducing the record information which has been recorded can be apparently performed simultaneously. Thus, the convenience of the information recording and reproducing apparatus can be certainly improved.

In one aspect of the first, second or third information recording and reproducing apparatus of the present invention, the information recording device is provided with: a processing unit for processing the input information and generating the record information; a record information memory device for temporarily storing the generated record information; and a recording unit for reading out the record information stored in the record information memory device and recording the read out record information onto the record medium at the recording rate. And that, the controlling device controls the information reproducing device to detect the record information, which has been recorded on the record medium, while controlling the information recording device to continue inputting the input information from the external during a time period in which the recording unit is not recording the record information onto the record medium and the record information memory device is storing the generated record information.

According to this aspect, the input information is processed and the record information is generated by the processing unit. Then, the generated record information is temporarily stored by the record information memory device. Then, the record information stored in the record information memory device is read out by the recording unit. Then, the read out record information is recorded onto the record medium at the recording rate. At this time, under the control of the controlling device, while the information recording device continues inputting the input information from the external during the time period, in which the recording unit is not recording the record information onto the record medium and the record information memory device is storing the generated record information, the information reproducing device detects the record information, which has been recorded on the record medium,

Accordingly, by virtue of a relatively simple structure, the operation of recording the record information and the operation of reproducing the record information which has been recorded can be apparently performed simultaneously.

In another aspect of the first, second or third information recording and reproducing apparatus of the present invention, the information reproducing device is provided with: a detecting unit for detecting the record information from the record medium at the detecting rate; a reproduction information memory device for temporarily storing the detected record information; and a re-processing unit for reading out the record information stored in the reproduction information memory device and for re-processing and reproducing the read out record information to output the reproduced record information to the external at the output rate. And that, the controlling device controls the information recording device to record the record information onto the record medium while controlling the information reproducing device to continue outputting the reproduced record information to the external during a time period in which the detecting unit is not detecting the record information and the re-processing unit is reading out, re-processing and reproducing the record information.

According to this aspect, the record information is detected from the record medium at the detecting rate by the detecting unit. Then, the detected record information is temporarily stored into the reproduction information memory device. Then, the record information stored in the reproduction information memory device is read out, is reprocessed and is reproduced by the re-processing unit, so that the reproduced record information is outputted to the external at the output rate. At this time, under the control of the controlling device, while the information reproducing device continues outputting the reproduced record information to the external during the time period, in which the detecting unit is not detecting the record information and the re-processing unit is reading out, re-processing and reproducing the record information, the information recording device records the record information onto the record medium.

Accordingly, by virtue of a relatively simple structure, the operation of recording the record information and the operation of reproducing the record information which has been recorded can be apparently performed simultaneously.

In another aspect of the first, second or third information recording and reproducing apparatus of the present invention, the apparatus is further provided with a single optical pickup for emitting a light beam onto the record medium and receiving a reflection light of the emitted light beam reflected from the record medium to output a detection signal indicating the record information, the single optical pickup being commonly used for the information recording device and the information reproducing device.

According to this aspect, the light beam is emitted by the single optical pickup onto the record medium, and the reflection light of the emitted light beam reflected from the record medium is detected by the single optical pickup, so that the detection signal indicating the record information is outputted. At this time, the single optical pickup is commonly used for the information recording device and the information reproducing device.

Accordingly, by virtue of a relatively simple structure, the operation of recording the record information and the operation of reproducing the record information which has been recorded can be apparently performed simultaneously.

The nature, utility, and further features of this invention will be more clearly apparent from the following detailed description with respect to preferred embodiments of the invention when read in conjunction with the accompanying drawings briefly described below.

In the drawings:

FIG. 1 is a block diagram of an information recording and reproducing apparatus as an embodiment of the present invention;

FIG. 2 is a flow chart showing an operation of the information recording and reproducing apparatus of FIG. 1; and
FIG. 3 is a diagram indicating a change of a data amount accumulated in each buffer memory in the embodiment.

Referring to the accompanying drawings, an embodiment of the present invention will be now explained. In the embodiment described below, the present invention is applied to an information recording and reproducing apparatus capable of recording and reproducing the information with respect to a record medium in a disc shape (hereinafter, it is simply referred to as an "optical disc") which can optically record and reproduce the information.

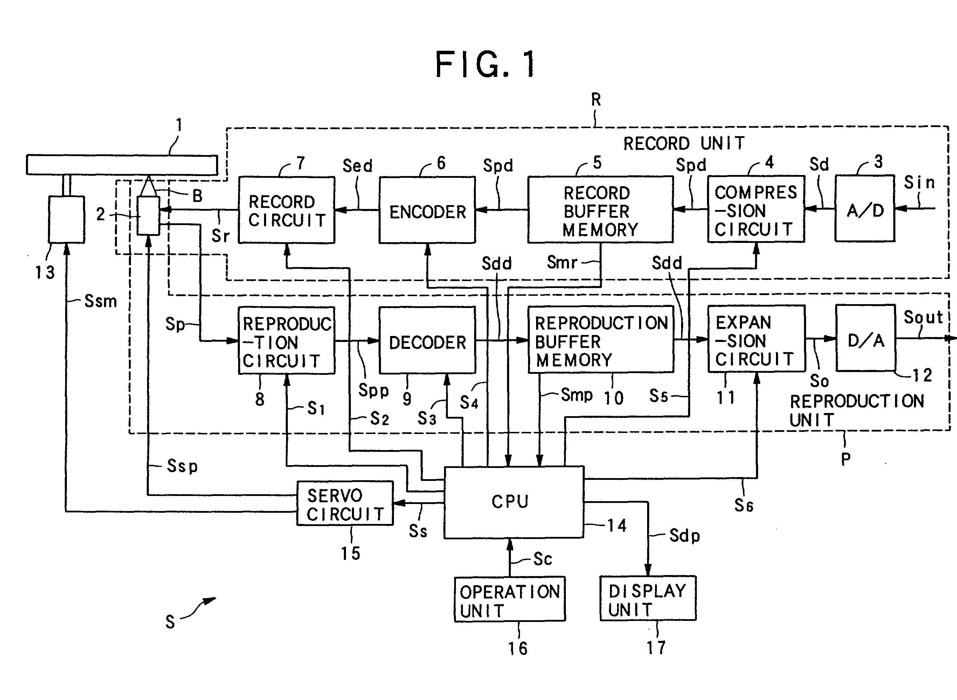

At first, a construction of the information recording and reproducing apparatus as the embodiment is explained with reference to FIG. 1.

In FIG. 1, an information recording and reproducing apparatus S is provided with: an optical pickup 2 as one example of a recording device and a detecting device; an A/D (Analog to Digital) converter 3; a compression circuit 4 as one example of a recording process device; a record buffer memory 5 as one example of a record information memory device; an encoder 6; a record circuit 7; a reproduction circuit 8; a decoder 9; a reproduction buffer memory 10 as one example of a reproduction information memory device; an expansion circuit 11 as one example of a reproduction processing device; a D/A (Digital to Analog) converter 12; a spindle motor 13; a CPU (Central Processing Unit) 14 as one example of a controlling device; a servo circuit 15; an operation unit 16; and a display unit 17.

In the above mentioned constitutional elements, the optical pickup 2, the A/D converter 3, the compression circuit 4, the record buffer memory 5, the encoder 6 and the record circuit 7 constitute an information record unit R as one example of an information recording device.

On the other hand, in the above mentioned constitutional elements, the optical pickup 2, the reproduction circuit 8, the decoder 9, the reproduction buffer memory 10, the expansion circuit 11 and the D/A converter 12 constitute an information reproduction unit P as one example of an information reproducing device.

Next, the operation of each constitutional element is explained.

At first, the operation is explained as for the case where the information to be recorded from an external device is recorded onto an optical disc 1 as one example of the record medium.

When an information signal Sin (which is an analog signal) corresponding to the information to be recorded (which includes video information and/or audio information) is inputted from an external device at an input rate Mr which is set in advance, the A/D converter 3 digitizes the information signal Sin and generates a digital information signal Sd to output it to the compression circuit 4.

Then, the compression circuit 4 compresses the digital information signal Sd, which is inputted from the A/D converter 3, on the basis of a control signal S5 outputted from the CPU 14 and generates a compressed information signal Spd to output it to the record buffer memory 5. At this time, when compressing the digital information signal Spd, a compression method such as the MPEG 2 (Moving Picture coding Experts Group 2) method or the like is employed.

Next, the record buffer memory 5 temporarily stores the compressed information signal Spd, which is inputted from the compression circuit 4, as it is. At this time, the record buffer memory 5 consecutively outputs a data amount signal Smr, which indicates a data amount of the compressed information signal Spd accumulated in the record buffer memory 5, to the CPU 4.

Then, the encoder 6 reads out the compressed information signal Spd temporarily stored in the record buffer memory 5 at a recording rate Rr, which is higher than the input rate Mr of the information signal Sin, on the basis of a control signal S4 outputted from the CPU 14, and generating an encode signal Sed by encoding the compressed information signal Spd read out from the record buffer memory 5, to output it to the record circuit 7.

Then, the record circuit 7 converts the encode signal Sed, which is inputted from the encoder 6, into a record signal Sr on the basis of a control signal S2 outputted from the CPU 14, to output it to the optical pickup 2. At this time, in the record circuit 7, a so-called write strategy process or the like is performed with respect to the encode signal Sed so as to form a pit in a shape, which precisely corresponds to the information to be recorded, on the optical disc 1.

Then, the optical pickup 2 generates a light beam B such as a laser light etc., by driving a light source such as a semiconductor laser etc., within the optical pickup 2, on the basis of the record signal Sr outputted from the record circuit 7, emits the generated light beam B onto an information record surface of the optical disc 1, and records the information signal Sin onto the optical disc 1 at a rate corresponding to the recording rate Rr by forming the pit corresponding to the record signal Sr. At this time, the optical disc 1 is rotated at a predetermined rotation number by the spindle motor 13, which is driven on the basis of a spindle control signal Ssm outputted from the servo circuit 15. Incidentally, on the optical disc 1, the information signal Sin is recorded by forming the pit corresponding to the record signal Sr by a phase modulating method for example.

Next, the operation of the embodiment is explained as for the case where the information recorded on the optical disc 1 is reproduced.

At the time of reproducing the information, the optical pickup 2 emits the light beam B for the reproduction onto the optical disc 1 which is being rotated, and generates a detection signal Sp corresponding to the pit formed on the optical disc 1 at a detecting rate Rp on the basis of a reflection light of the emitted light beam B.

Then, the reproduction circuit 8 amplifies the detection signal Sp outputted from the optical pickup 2 at a predetermined amplification factor and trims the waveform of the detection signal Sp, on the basis of a control signal S1 outputted from the CPU 14, and generates a reproduction signal Spp to output it to the decoder 9.

Then, the decoder 9 decodes the reproduction signal Spp by a decoding method corresponding to the encoding method in the encoder 6 on the basis of a control signal S3 outputted from the CPU 14, and generates a decode signal Sdd to outputs it to the reproduction buffer memory 10 at a rate corresponding to the detecting rate Rp.

Then, the reproduction buffer memory 10 temporarily stores the decode signal Sdd, which is inputted from the decoder 9, as it is. At this time, the reproduction buffer memory 10 consecutively outputs a data amount signal Smp which indicates a data amount of the decode signal Sdd accumulated in the reproduction buffer memory 10, to the CPU 14.

Then, the expansion circuit 11 reads out the decode signal Sdd temporarily stored in the reproduction buffer memory 10 at an output rate Mp, which is lower than the detecting rate Rp for the detection signal Sp, on the basis of a control signal S6 outputted from the CPU 14, applies an expanding process corresponding to the compressing process in the compression circuit 4 with respect to the read out decode signal Sdd, and generates an expanded signal So and outputs it to the D/A converter 12.

Then, the D/A converter 12 converts the expanded signal So into an analog form, and generates an output signal Sout corresponding to the information signal Sin to output it to the external device.

Along with the operation of recording and reproducing the information as described above, the CPU 14 outputs the control signals S1 to S6 so as to perform the processes indicated by a flow chart described later, on the basis of the data amount signal Smp or Smr. At this time, the operation unit 16 outputs a command signal Sc, which corresponds to the operation performed on an operation panel, switches or the like thereof by the user, to the CPU 14. The CPU 14 outputs the control signals S1 to S6 respectively on the basis of the command signal Sc.

Along with this, the CPU 14 generates a control signal Ss for servo-controlling the spindle motor 13 and the optical pickup 2 to output it to the servo-circuit 15. The servo-circuit 15 generates the spindle control signal Ssm for controlling the rotation of the spindle motor 13 on the basis of the control signal Ss, and generates a pickup control signal Ssp for performing a so-called tracking servo-control and a so-called focus servo-control of the optical pickup 2, to output it to the optical pickup 2. Then, the optical pickup 2 performs recording the record information Sr (information signal Sin) or detecting the detection signal Sp while performing the tracking servo-control and the focus servo-control with respect to the light beam B on the basis of the pickup control signal Ssp outputted from the servo circuit 15.

Incidentally, the information necessary for the user to control the operation of the information recording and reproducing apparatus S is displayed on the display unit 17 on the basis of a display signal Sdp outputted from the CPU 14.

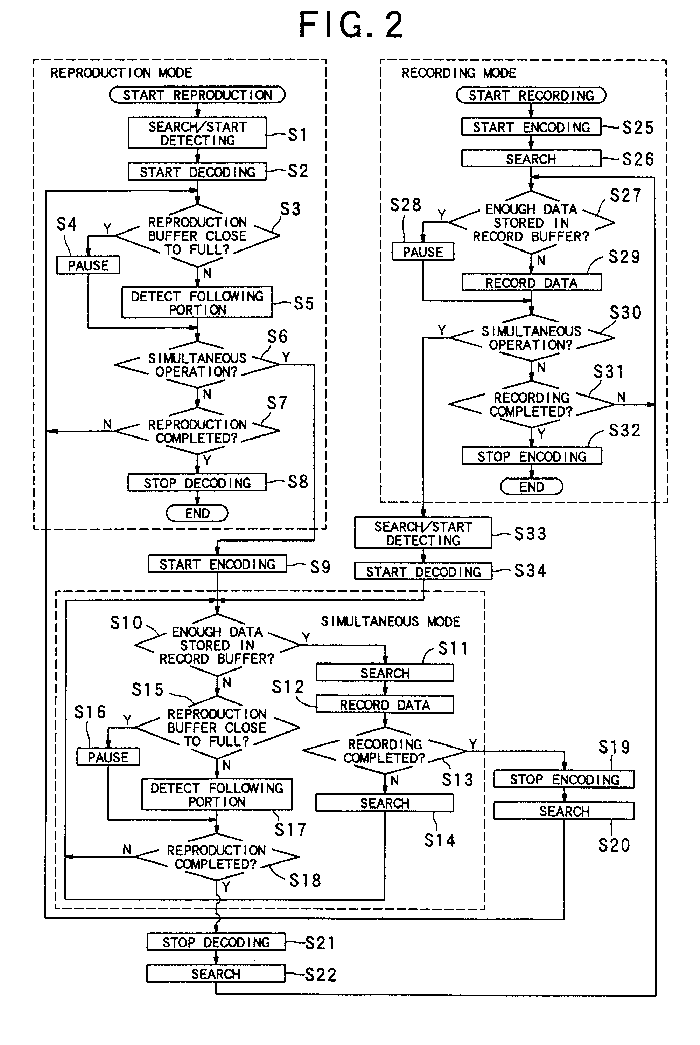

Next the recording and reproducing operations of the information recording and reproducing apparatus S having the above described construction will explained with reference to FIG. 2. In FIG. 2, the processes for only reproducing the information are indicated by steps S1 to S8, the processes for only recording the information are indicated by steps S25 to S32, while the processes for simultaneously (apparently) recording and reproducing the information are indicated by steps S10 to S18.

At first, the operation is explained as for the case where the simultaneous recording operation is instructed during a reproducing operation.

In the information recording and reproducing apparatus S, when the operation of reproducing the information from the optical disc 1 is instructed, the position on the optical disc 1 where the record signal Sr is to be reproduced is searched, the light spot of the light beam B is moved to the searched position, and the generation of the detection signal Sp is started at the detecting rate Rp (step S1). Then, the decoding process for the generated detection signal Sp is started by the decoder 9 (step S2). When this decoding process is started, the decode signal Sdd is accumulated in the reproduction buffer memory 10 at a rate corresponding to the detecting rate Sp.

Then, the CPU 14 judges whether or not the empty space of the capacity in the reproduction buffer memory 10 is reduced to be equal to or less than a 1st predetermined amount, on the basis of the data amount signal Smp outputted from the reproduction buffer memory 10 (step S3). Here, the 1st predetermined amount is set equal to a minimum decode unit of the decode signal Sdd (e.g., a data amount equal to one ECC (Error Collecting Code) block of the decode signal Sdd).

According to the judgment at the step S3, if the empty space of the capacity in the reproduction buffer memory 10 is equal to or less than the 1st predetermined amount (step S3: YES), since the reproduction buffer memory 10 would be full if the generation of the detection signal Sp were further continued, the optical pickup 2 is controlled to temporarily pause so as to stop the generation of the detection signal Sp (step S4). Then, the operation flow proceeds to a step S6.

On the other hand, according to the judgment at the step S3, if the empty space of the capacity in the reproduction buffer memory 10 is larger than the 1st predetermined amount (step S3: NO), the record signal Sr is further detected and the detection signal Sp is further generated (step S5).

Then, the CPU 14 judges whether or not the simultaneous recording operation is instructed during the reproduction through the operation unit 15 (step S6).

Then, if there is no instruction of the simultaneous recording operation (step S6: NO), it is judged whether or not all of the information to be reproduced is already reproduced (step S7). If the reproduction of all of the information is already completed (step S7: YES), the decoding operation by the decoder 9 is stopped (step S8). Then, the information reproducing process is ended.

On the other hand, if the reproduction of all of the information is not completed yet (step S7: NO), the operational flow returns to the step S3, so that the above described information reproducing process is repeated.

On the other hand, according to the judgment at the step S6, if the simultaneous recording operation is instructed (step S6: YES), the compressed information signal Spd which is temporarily stored in the record buffer memory 5 (i.e., which is accumulated in the record buffer memory 5 at a rate corresponding to the input rate Mr as the A/D conversion by the A/D converter 3 for the inputted information signal Sin and the compression by the compression circuit 4 for the digital information signal Sd are performed immediately after the simultaneous recording operation is instructed at the step S6) is read out at the recording rate Rr and the process of encoding the compressed information signal Spd is started by the encoder 6 (step S9).

Then, the CPU 14 judges whether or not the data amount accumulated in the record buffer memory 5 is increased to be equal to or larger than a 2nd predetermined amount, which is set in advance, on the basis of the data amount signal Smr outputted from the record buffer memory 5 (step S10). If the accumulated data amount is equal to or larger than the 2nd predetermined amount (step S10: YES), the generation of the detection signal Sp by the optical pickup 2 is controlled to temporarily pause (while the expansion circuit 11 and the D/A converter 12 are controlled by the CPU 14 to consecutively perform the expansion and the A/D conversion of the decode signal Sdd accumulated in the reproduction buffer memory 10 respectively during this pause). Then, a position on the optical disc 1 where the encode signal Sed (which is encoded by the step S9) is to be recorded is searched, and the optical pickup 2 is moved to the searched position (step S11). Then, the encode signal Sed in a 3rd predetermined amount which is set in advance is recorded onto the optical disc 1 through the optical pickup 2 (step S12).

At this time, the 2nd predetermined amount is set to such an amount that the record buffer memory 5 is not full even if the encode signal Sed is kept to be accumulated into the record buffer memory 5 at the input rate Mr until the operation of recording the record signal Sr is started after the completion of the judgment at the step S10 and the movement of the optical pickup 2 at the step S11, on the basis of the storage capacity Br of the record buffer memory 5. On the other hand, the 3rd predetermined amount may be set equal to the 2nd predetermined amount or larger than the 2nd predetermined amount so as to output all of the encode signal Sed accumulated in the record buffer memory 5, with considering the amount of the encode signal Sed newly accumulated in the record buffer memory 5 while the record signal Sr is being recorded.

Then, it is judged whether or not the record signal Sr to be recorded has been completely recorded (step S13). If it is not completely recorded (step S13: NO), the operation of recording the record signal Sr by the optical pickup 2 is controlled to temporarily pause (while A/D converter 3 and the compression circuit 4 are controlled by the CPU 14 to continue the accumulation of the compressed information signal Spd into the record buffer memory 5 at the input rate Mr during this pause). Then, a position on the optical disc 1 where the record signal Sr is to be nextly reproduced is searched, and the optical pickup 2 is moved to the searched position, so as to start again the generation of the detection signal Sp in accompaniment with the decrease of the data amount accumulated in the reproduction buffer memory 10 (step S14). Then, the operational flow returns to the step S10.

On the other hand, according to the judgment at the step S13, if the operation of recording the record signal Sr is completed (step S13: YES), the encoding operation by the encoder 6 is ended (step S19), a position on the optical disc 1 where the record signal Sr is to be nextly detected is searched, and the optical pickup 2 is moved to the searched position, so as to start again the information reproduction (step S20). Then, the operational flow returns to the step S3.

On the other hand, according to the judgment at the step S10, if the accumulated data amount in the record buffer memory 5 is less than the 2nd predetermined amount (step S10: NO), the CPU 14 judges whether or not the empty space of the capacity in the reproduction buffer memory 10 is reduced to be equal to or less than the 1st predetermined amount on the basis of the data amount signal Smp outputted from the reproduction buffer memory 10 (S15).

Then, if the empty space of the capacity in the reproduction buffer memory 10 is equal to or less than the 1st amount (step S15: YES), the optical pickup 2 is controlled to temporarily pause and the generation of the detection signal Sp is stopped in the same manner as the step S4 (step S16). Then, the operational flow proceeds to a step S18. Incidentally, even at this time, the input of the information signal Sin, the accumulation of the compressed information signal Spd into the record buffer memory 5 along with the input of the information signal Sin, the output of the decode signal Sdd from the reproduction buffer memory 10 and the output of the output signal Sout from the D/A converter 12 along with the output of the output signal Sout are continued.

On the other hand, according to the judgment at the step S15, if the empty space of the capacity in the reproduction buffer memory 10 is larger than the $1^{st}$ predetermined amount (step S15: NO), the record signal Sr is consecutively detected at the detecting rate Rp and the detection signal S is further generated (step S17). Then, it is judged whether or not all of the information to be reproduced is already reproduced (step S18). If the reproduction of all of the information is already completed (step S18: YES), the decoding operation by the decoder 9 is stopped (step S21). Then, a position on the optical disc 1 where the encode signal Sed (which is encoded by the step S9) is to be recorded is searched, and the optical pickup 2 is moved to the searched position (step S22). Then, the operational flow proceeds to a step S27. During the operation at the step S17, the input of the information signal Sin and the accumulation of the compressed information signal Spd into the record buffer memory 5 along with this input are continued.

On the other hand, if the reproduction of all of the information is not completed yet (step S18: NO), the operational flow returns to the step S10, so that the above described information reproducing process is repeated.

On the other hand, at the steps S11 and S12, the new record signal Sr may be recorded continuously in the area on the optical disc 1 other than the area where the record signal Sr has been already recorded, or may be recorded so as to overwrite the area where the record signal Sr has been already reproduced. In the latter case, since the non-recorded new area is not used, it is possible to efficiently use the recordable area of the optical disc 1.

Next, the operation is explained as for the case where the simultaneous recording operation is instructed during a recording operation.

In the information recording and reproducing apparatus S, when the operation of reproducing the information from the optical disc 1 is instructed, the compressed information signal Spd is accumulated into the record buffer memory 5 by performing the A/D converting process and the compressing process for the information signal Sin to be recorded at a rate corresponding to the input rate Mr. Then, the encoding process in the encoder 6 is started by reading out the compressed information signal Spd accumulated in the record buffer memory 5 (step S25).

Then, the position on the optical disc 1 where the record signal Sr is to be recorded is searched, the light spot of the light beam B is moved to the searched position, and the operation of recording the record signal Sr is performed at the recording rate Rr (step S26).

Then, the CPU 14 judges whether or not the empty space of the capacity in the record buffer memory 5 is increased to be equal to or larger than a $4^{th}$ predetermined amount, on the basis of the data amount signal Smr outputted from the record buffer memory 5 (step S27). If the empty space of the capacity in the record buffer memory 5 is less than the $4^{th}$ predetermined amount (step S27: NO), the operation of the optical pickup 2 for recording the record signal Sr is controlled to temporarily pause so as to wait until this empty space of the capacity reaches the $4^{th}$ predetermined amount (step S28). Then, the operational flow proceeds to a step S30. Incidentally, even at this time, the input of the information signal Sin and the accumulation of the compressed information signal Spd into the record buffer memory along with this input are continued.

On the other hand, according to the judgment at the step S27, if the empty space of the capacity in the reproduction buffer memory 10 is equal to or larger than the $4^{th}$ predetermined amount (step S27: YES), the encode signal Sed (record signal Sr) in a $5^{th}$ predetermined amount, which is set in advance, is recorded onto the optical disc 1 at the recording rate Rr through the optical pickup 2.

In the above explained steps S27 and S29, the $4^{th}$ predetermined amount may be any data amount as long as it is equal to or less than the $2^{nd}$ predetermined amount, and the $5^{th}$ predetermined amount may be any data amount as long as it is equal to or less than the $3^{rd}$ predetermined amount.

Then, the CPU 14 judges whether or not the simultaneous recording operation is instructed during the recording operation through the operation unit 15 (step S30).

Then, if there is no instruction of the simultaneous recording operation (step S30: NO), it is judged whether or not all of the information to be recorded is already recorded (step S31). If the recording of all of the information is already completed (step S31: YES), the encoding operation by the encoder 6 is stopped (step S32). Then, the information recording process is ended.

On the other hand, if the recording of all of the information is not completed yet (step S31: NO), the operational flow returns to the step S27, so that the above described information recording process is repeated.

On the other hand, according to the judgment at the step S30, if the simultaneous recording operation is instructed (step S30: YES), the operation of the optical pickup 2 for recording the record signal Sr is controlled to temporarily pause (while the accumulation of the generated compressed information signal Spd into the record buffer memory 5 at the input rate Mr is continued as the A/D conversion by the A/D converter 3 for the inputted information signal Sin and the compression by the compression circuit 4 for the digital information signal Sd are performed under the control of the CPU 14 during this pause). Then, the position on the optical disc 1 where the record signal Sr is to be reproduced is searched, the light spot of the light beam B is moved to the searched position, and the generation of the detection signal Sp is started at the detecting rate Rp (step S33). Then, the decoding process for the generated detection signal Sp is started by the decoder 9 (step S34). When this decoding process is started, the decode signal Sdd is accumulated into the reproduction buffer memory 10 at a rate corresponding to the detecting rate Sp.

After that, the operational flow proceeds to the step S10, and the steps S10 to S22 are performed so as to perform the reproducing operation during the recording operation while the data amount accumulated in the record buffer memory 5 and the data amount accumulated in the reproduction buffer memory 10 are respectively monitored.

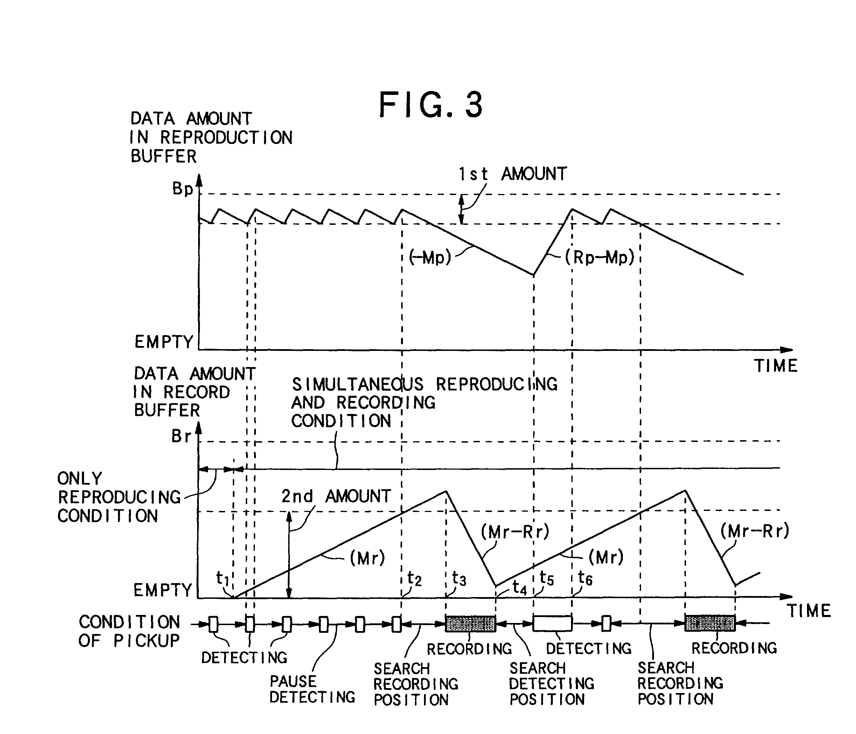

Next, the reproducing operation and the recording operation explained with reference to FIG. 2 will be further explained with reference to FIG. 3 mainly as for the change of the data amount accumulated in each of the record buffer memory 5 and the reproduction buffer memory 10. FIG. 3 indicates the change of the data amount accumulated in each buffer in the case where the simultaneous recording operation is instructed during the reproducing operation. At the bottom stage of FIG. 3 where the "condition of pickup" is indicated, the detection of the detection signal Sp is performed in each time band indicated by a white empty area while the recording of the record signal Sr is performed in each time band indicated by a meshed area.

In FIG. 3, when only the reproducing operation is performed, the data amount accumulated in the reproduction buffer memory 10 (whose capacity is Bp) changes such that the empty space of the capacity therein is in the range of the data amount not larger than the minimum decode unit. Namely, when the empty space of the capacity becomes equal to or larger than the 1st predetermined amount, the detection of the record signal Sr is started (at the detection rate Rp) such that the empty space of the capacity in the reproduction buffer memory 10 increases at a rate R as expressed by a following expression.

$$R = \text{(detection rate Rp)} - \text{(output rate Mp)}.$$

After that, when the empty space of the capacity becomes less than the 1st predetermined amount, the detection of the record signal Sr is controlled to temporarily pause, and only the output of the output signal Sout (at the output rate Mp) is performed. These start and pause of the detection of the record signal Sr are repeated.

Then, when the simultaneous recording and reproducing operation is instructed during the reproduction at a time t1 (refer to the step S6), the accumulation of the compressed information signal Spd into the record buffer memory 5 is started at the input rate Mr (refer to the step S9) and the data amount accumulated in the record buffer memory 5 is monitored (refer to the step S10). Then, when the data amount accumulated in the record buffer memory 5 reaches the 2nd predetermined amount at a time t2, the detection of the detection signal Sp is controlled to temporarily pause, and the recording position for the new record signal Sr is searched. Then, the recording of the record signal Sr is started at a time t3 (refer to the steps S11 and S12). Even at this time, the output of the decode signal Sdd from the reproduction buffer memory 10 is continued.

Then, when the recording of the record signal Sr in the 3rd predetermined amount is completed at a time t4, the optical pickup 2 is moved to the next detecting position so as to perform the detection of the detection signal Sp again (refer to the step S14). Then, from a time t5 until the data amount accumulated in the record buffer memory 5 reaches the 2nd predetermined amount (i.e., until a time t6), the detection of the detection signal Sp is continued.

Then, after the data amount accumulated in the record buffer memory 5 reaches the 2nd predetermined amount, the movement of the optical pickup 2 to the recording position and the recording of the record signal Sr are performed (refer to the steps S11 and S12).

After that, the above described operation is repeatedly performed until all of the information signal Sin to be recorded is recorded.

At this time, the data amount accumulated in reproduction buffer memory 10 decreases at the output rate Mp while the movement of the optical pickup 2 to the recording position, the actual recording of the record signal Sr and the movement of the optical pickup 2 to the detecting position are performed (i.e., from the t2 until the time t5), and increases at the above mentioned rate R after the detection of the detection signal Sp is started again. These increase and decrease of the accumulated data amount are repeated.

On the other hand, the data amount accumulated in the record buffer memory 5 increases at the input rate Mr since the simultaneous recording and reproducing command is instructed during the reproduction until the movement of the optical pickup 2 to the recording position is completed (i.e., from the t1 until the time t3), and decreases at a rate R' as expressed by a following expression while the record signal Sr is actually recorded.

$$R' = \text{(input rate Mr)} - \text{(recording rate Rr)}$$

Then, when the detection of the detection signal Sp is started again, since the input of the information signal Sin is continued, the data amount accumulated in the record buffer memory 5 increases at the input rate Mr again. These increase and decrease of the accumulated data amount are repeated.

As described above, according to the operation of the information recording and reproducing apparatus S in the embodiment, the record signal Sr which has been recorded on the optical disc 1 can be reproduced while the input of the information from the external device is continued, and since the record signal Sr which is not recorded yet can be recorded while the output of the detected record signal Sr to the external device is continued, it is possible to simultaneously perform the recording operation and the reproducing operation apparently as a whole of the information recording and reproducing apparatus S.

Further, since the record signal Sr which has been already recorded can be detected while the compressed information signal Spd is being stored into the record buffer memory 5, and since the record signal Sr which is not recorded yet can be recorded while the decode signal Sdd is being read out from the reproduction buffer memory 10, it is possible to simultaneously perform the recording operation and the reproducing operation by means of a relatively simplified structure.

Incidentally, although the optical disc 1 is employed as one example of the record medium in the above mentioned embodiment, the present invention can be applied to any kind of record medium other than that as long as it enables reading and writing the information and it enables random-accessing, such as a semiconductor memory or the like.

Furthermore, although the compression process and expansion process are performed in the information recording and reproducing apparatus S in the above mentioned embodiment, the present invention can be widely applied to other type of the information recording and reproducing apparatus as long as it performs the recording and reproducing operations in which the input rate of the information from the external device is lower than the recording rate of the information onto the record medium and the detecting rate of the information from the record medium is higher than the output rate of the information to the external device.

**Claims**

1. An information recording and reproducing apparatus (S) characterized in that said information recording and reproducing apparatus comprises:

   an information recording device (R) for generating record information by processing input information, which is inputted from the external at a predetermined input rate, and for recording the generated record information onto a record medium (1) at a recording rate which is higher than the predetermined input rate;
   an information reproducing device (P) for detecting the record information from said record medium at a predetermined detecting rate and for reproducing the detected record information by re-processing the detected record information to output the reproduced record information to the external at an output rate which is lower than the predetermined detecting rate; and
   a controlling device (14) for controlling said information recording device to temporarily stop generating and/or recording the record information during a first pause time period, which is prescribed by a difference between the recording rate and the input rate, and for controlling said information reproducing device to detect and reproduce the record information, which has been recorded on said record medium by said information recording device, during the first pause time period.

2. An information recording and reproducing apparatus (S) characterized in that said information recording and reproducing apparatus comprises:

   an information recording device (R) for generating record information by processing input information, which is inputted from the external at a predetermined input rate, and for recording the generated record information onto a record medium (1) at a recording rate which is higher than the predetermined input rate;
   an information reproducing device (P) for detecting the record information from said record medium at a predetermined detecting rate and for reproducing the detected record information by re-processing the detected record information to output the reproduced record information to the external at an output rate which is lower than the predetermined detecting rate; and
   a controlling device (14) for controlling said information reproducing device to temporarily stop detecting and/or reproducing the record information during a second pause time period, which is prescribed by a difference between the detecting rate and the output rate, and for controlling said information recording device to generate and record the record information, which has never been recorded on said record medium yet, during the second pause time period.

3. An information recording and reproducing apparatus (S) characterized in that said information recording and reproducing apparatus comprises:

   an information recording device (R) for generating record information by processing information, which is inputted from the external at a predetermined input rate, and for recording the generated record information onto a record medium (1) at a recording rate which is higher than the predetermined input rate;
   an information reproducing device (P) for detecting the record information from said record medium at a predetermined detecting rate and for reproducing the detected record information by re-processing the detected record information to output the reproduced record information to the external at an output rate which is lower than the predetermined detecting rate; and

a controlling device (14) for controlling said information recording device to temporarily stop generating and/or recording the record information during a first pause time period, which is prescribed by a difference between the recording rate and the input rate, for controlling said information reproducing device to detect and reproduce the record information, which has been recorded on said record medium by said information recording device, during the first pause time period while continuously inputting the input information from the external, for controlling said information reproducing device to temporarily stop detecting and/or reproducing the record information during a second pause time period, which is prescribed by a difference between the detecting rate and the output rate, and for controlling said information recording device to generate and record the record information, which has never been recorded on said record medium yet, during the second pause time period while continuously outputting the reproduced record information to the external.

4. An apparatus (S) according to any one of claims 1 to 3, characterized in that said information recording device (R) comprises:

a processing unit (4) for processing the input information and generating the record information;
a record information memory device (5) for temporarily storing the generated record information; and
a recording unit (2, 7, 6) for reading out the record information stored in said record information memory device and recording the read out record information onto said record medium (1) at the recording rate, and
said controlling device (14) controls said information reproducing device (P) to detect the record information, which has been recorded on said record medium, while controlling said information recording device (R) to continue inputting the input information from the external during a time period in which said recording unit is not recording the record information onto said record medium and said record information memory device is storing the generated record information.

5. An apparatus (S) according to any one of claims 1 to 4, characterized in that said information reproducing device (P) comprises:

a detecting unit (2, 8, 9) for detecting the record information from said record medium (1) at the detecting rate;
a reproduction information memory device (10) for temporarily storing the detected record information; and
a re-processing unit (11) for reading out the record information stored in said reproduction information memory device and for re-processing and reproducing the read out record information to output the reproduced record information to the external at the output rate, and
said controlling device (14) controls said information recording device (R) to record the record information onto said record medium while controlling said information reproducing device (P) to continue outputting the reproduced record information to the external during a time period in which said detecting unit is not detecting the record information and said re-processing unit is reading out, re-processing and reproducing the record information.

6. An apparatus (S) according to any one of claims 1 to 5, characterized in that said apparatus further comprises a single optical pickup (2) for emitting a light beam (B) onto said record medium (1) and receiving a reflection light of the emitted light beam reflected from said record medium to output a detection signal indicating the record information, said single optical pickup being commonly used for said information recording device (R) and said information reproducing device (P).

# FIG. 1

# FIG. 2

# FIG. 3

DATA AMOUNT
IN REPRODUCTION
BUFFER

1st AMOUNT

Bp

(-Mp)     (Rp-Mp)

EMPTY

TIME

DATA AMOUNT
IN RECORD
BUFFER

SIMULTANEOUS REPRODUCING
AND RECORDING
CONDITION

Br

ONLY
REPRODUCING
CONDITION

2nd AMOUNT

(Mr-Rr)     (Mr-Rr)

(Mr)     (Mr)

EMPTY   t1     t2  t3    t4 t5  t6

TIME

CONDITION
OF PICKUP

DETECTING     RECORDING   DETECTING   RECORDING

PAUSE
DETECTING

SEARCH
RECORDING
POSITION

SEARCH
DETECTING
POSITION

SEARCH
RECORDING
POSITION

EP 0 932 153 A2